(19) Europäisches Patentamt
European Patent Office
Office européen des brevets

(11) **EP 4 365 504 A1**

(12) **EUROPEAN PATENT APPLICATION**
published in accordance with Art. 153(4) EPC

(43) Date of publication:
**08.05.2024 Bulletin 2024/19**

(21) Application number: **23773591.5**

(22) Date of filing: **03.03.2023**

(51) International Patent Classification (IPC):
**F24F 11/48** (2018.01)

(52) Cooperative Patent Classification (CPC):
**F24F 11/48;** F24F 2110/10; F24F 2110/12;
F24F 2110/64; F24F 2140/12; Y02B 30/70

(86) International application number:
**PCT/CN2023/079615**

(87) International publication number:
**WO 2023/179340 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022 CN 202210302226**

(71) Applicants:
• **GD Midea Heating & Ventilating Equipment Co.,
Ltd.**
**Foshan, Guangdong 528311 (CN)**
• **Hefei Midea Heating & Ventilating Equipment
Co., Ltd.**
**Hefei, Anhui 230601 (CN)**

(72) Inventors:
• **JIANG, Yunpeng**
**Foshan, Guangdong 528311 (CN)**
• **WU, Xiaohong**
**Foshan, Guangdong 528311 (CN)**
• **YAN, Huazhou**
**Foshan, Guangdong 528311 (CN)**
• **LI, Pengfei**
**Foshan, Guangdong 528311 (CN)**
• **HUANG, Zhilin**
**Foshan, Guangdong 528311 (CN)**

(74) Representative: **RGTH**
**Patentanwälte PartGmbB**
**Neuer Wall 10**
**20354 Hamburg (DE)**

(54) **MULTI-SPLIT AIR CONDITIONER AND CONTROL METHOD THEREFOR, STORAGE MEDIUM,
AND ELECTRONIC DEVICE**

(57) A multi-split air conditioner and a control method therefor, a storage medium, and an electronic device, relating to the technical field of air conditioners. The method comprises: obtaining a theoretical discharge pressure according to geometric parameters of an outdoor unit, air supply port parameters of an indoor unit, an outdoor ambient temperature, and an indoor ambient temperature; obtaining a pressure deviation according to a high pressure of the outdoor unit and the theoretical discharge pressure; and performing starting control of the multi-split air conditioner system according to the pressure deviation.

FIG. 1

**Description**

**CROSS-REFERENCE TO RELATED APPLICATION**

This application claims priority to Chinese Patent Application No. 202210302226.1 filed on March 24, 2022 and entitled "MULTI-SPLIT AIR CONDITIONER AND CONTROL METHOD THEREFOR, STORAGE MEDIUM, AND ELECTRONIC DEVICE", the entire disclosure of which is incorporated herein by reference.

**FIELD**

The present disclosure relates to the technical field of air conditioner, and more particularly, to a multi-split air conditioner, a control method thereof, a storage medium, and an electronic device.

**BACKGROUND**

At present, a lower limit of an operating range of heating by a multi-split air conditioner at a low-temperature has reached -30°C. Compared with the conventional heating conditions, the starting and operating conditions of ultra-low-temperature heating are more severe, especially for a long period of ultra-low-temperature standby. For a system having a drop height with multiple refrigerant conditions and an indoor unit provided above and an outdoor unit provided below, when performing the starting of the ultra-low temperature heating after a long period of ultra-low temperature standby, a large amount of low temperature liquid refrigerant migrates to the outdoor unit side of the multi-split air conditioner system due to gravity and temperature difference, resulting in a large amount of liquid refrigerant in the outdoor unit heat exchanger, the low pressure tank and the compressor, while the full liquid refrigerant in the low pressure tank means that the low pressure tank directly returns the liquid refrigerant to the compressor air return port when the compressor starts, which will inevitably result in a large amount of liquid in the suction air of the compressor, leading to abnormal starting of the compressor, abnormal vibration of the system pipeline and serious damage to the compressor.

**SUMMARY**

The present disclosure is intended to solve at least one of the technical problems in the related art to some extent. To this end, it is an object of the present disclosure to provide a multi-split air conditioner and a control method therefor, a storage medium, and an electronic device, which change a situation where the multi-split air conditioner is started and then protected for heating at a low-temperature, improve the reliability of the multi-split air conditioner, and reduce the maintenance cost of the multi-split air conditioner.

In a first aspect, the present disclosure provides a control method for a multi-split air conditioner including an outdoor unit and an indoor unit, the method including: obtaining a theoretical discharge pressure according to the geometric parameters of an outdoor unit, air supply port parameters of an indoor unit, an outdoor ambient temperature, and an indoor ambient temperature; obtaining a pressure deviation according to the high pressure of the outdoor unit and the theoretical discharge pressure; and performing starting control of a multi-split air conditioner system according to the pressure deviation.

In a second aspect, the present disclosure provides a computer-readable storage medium, having stored thereon a computer program which, when executed by a processor, implements the method of the above-described embodiments.

In a third aspect, the present disclosure provides an electronic device including a memory, a processor and a computer program stored on the memory, wherein the computer program, when executed by the processor, implements the method of the above embodiments.

In a fourth aspect, the present disclosure provides a multi-split air conditioner including the electronic device of the above embodiment.

The multi-split air conditioner and the control method thereof, the storage medium and the electronic device of an embodiment of the present disclosure is based on system parameters of the multi-split air conditioner before the starting of the low-temperature heating, firstly, a starting severity degree is evaluated, and then the evaluation result is used as a selection basis of a system starting strategy, so as to change a situation where the multi-split air conditioner is firstly started and then is protected for the low-temperature heating, and by starting a diagnosis, a system and a compressor are further protected, thereby improving the reliability of the multi-split air conditioner and reducing maintenance costs of the multi-split air conditioner.

Additional aspects and advantages of the present disclosure will be set forth in part in the description which follows and, in part, will be obvious from the description, or may be learned by practice of the present disclosure.

**BRIEF DESCRIPTION OF DRAWINGS**

FIG. 1 is a schematic flow chart of a control method for a multi-split air conditioner according to at least one embodiment of the present disclosure;
FIG. 2 is a schematic diagram illustrating a structure of a multi-split air conditioner according to at least one embodiment of the present disclosure.

**DETAILED DESCRIPTION OF EMBODIMENTS**

With an increasing demand of heating ventilation air conditioning market, in order to meet the needs of customers in all aspects, a multi-split air conditioner as part of the air conditioning market also faces greater challenges. One need is that the multi-split air conditioner can operate reliably over a wider range of cooling and heating operations. Therefore, the long period standby low-temperature heating start of the multi-split air conditioner is a subject that needs to be taken seriously when designing the multi-split air conditioner. At present, many manufacturers of multi-split air conditioner have carried out a lot of control optimization on the starting process of low-temperature heating in view of the above-mentioned subject, so as to avoid the problems of liquid impact and vibration of a compressor. However, none of the above-mentioned technologies involves the identification of system parameters before starting, and in fact, if the system is in a state where the refrigerant is excessive and the refrigerant migration on the outdoor unit side is serious, it is not suitable to directly start the system, because the compressor must return liquid, resulting in internal wear and requiring additional measures to weaken the refrigerant migration effect and then try to start the system. In order to solve the above problems, the present disclosure provides a multi-split air conditioner, a control method thereof, a storage medium, and an electronic device.

Reference will now be made in detail to the embodiments of the present disclosure, examples of which are illustrated in the accompanying drawings, wherein like reference numerals refer to the same or similar elements, or elements having same or similar function throughout the several views. The embodiments described below with reference to the figures are exemplary and are intended to be illustrative of the present disclosure and are not to be construed as limiting the present disclosure.

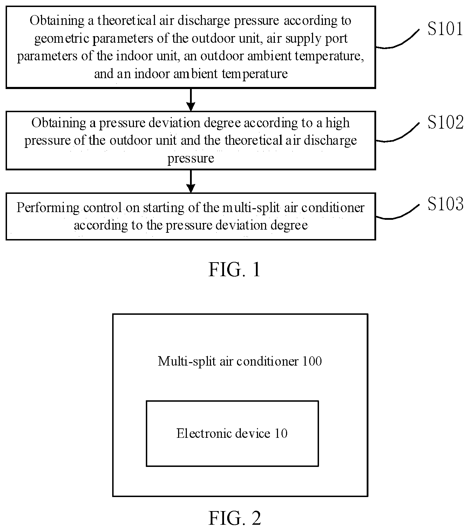

Hereinafter, a multi-split air conditioner, a control method thereof, a storage medium, and an electronic device according to an embodiment of the present disclosure will be described with reference to FIGS. 1 and 2.

FIG. 1 is a schematic flow chart of a control method for a multi-split air conditioner according to at least one embodiment of the present disclosure.

In at least one embodiment of the present disclosure, the multi-split air conditioner includes an outdoor unit and an indoor unit, wherein the outdoor unit is disposed outdoors, the indoor unit is disposed indoors, the number of the indoor units may be one or more, the outdoor unit is connected to each of the indoor units through piping, and the outdoor unit includes a compressor.

Further, the outdoor unit further includes an oil separator, a four-way valve and an air-liquid separator, wherein an air discharge port of the air-liquid separator is connected to an air return port of the compressor via an air return pipe, an air outlet of the compressor is connected to an air inlet of the oil separator, an air discharge port of the oil separator is connected to a first end of the four-way valve, a second end of the four-way valve is connected to one end of an indoor heat exchanger of the indoor unit via an air pipe, the other end of the indoor heat exchanger is connected to one end of an outdoor heat exchanger via a liquid pipe, the other end of the outdoor heat exchanger is connected to a third end of the four-way valve, and a fourth end of the four-way valve is connected to an inlet of the air-liquid separator. Each of the indoor units includes the indoor heat exchanger, and the outdoor unit further includes the outdoor heat exchanger and a throttling device connected between the outdoor heat exchanger and the indoor heat exchanger. The throttling device may be an electronic expansion valve.

As shown in FIG. 1, a control method for a multi-split air conditioner includes:
S101: obtaining a theoretical discharge pressure according to geometric parameters of the outdoor unit, air supply port parameters of the indoor unit, an outdoor ambient temperature, and an indoor ambient temperature.

In some embodiments, in a single refrigerant circulation system, the geometric parameters (which may include: length $OduL_i$, width $OduW_i$, and hight $OduH_i$) of all outdoor units, the air supply port parameters (which may include: length $IduL_i$, width $IduW_i$ of an air supply port) of all indoor units, the outdoor ambient temperature sensor values $T4_i$ of each outdoor unit, and the indoor ambient sensor temperature $T1_i$ of each indoor unit are obtained first. The number of outdoor units of the multi-split air conditioner is M, and the number of indoor units is N. In addition, the geometric parameters of the outdoor unit and the air supply port parameters of the indoor unit are inherent parameters of the refrigerant circulation system and can be stored in advance for direct acquisition; the outdoor ambient temperature may be measured in real time by a temperature sensor provided on the outdoor unit, and the indoor ambient temperature may be measured in real time by a temperature sensor provided on the indoor unit. Then, the theoretical discharge pressure is obtained according to the geometric parameters of the outdoor unit, the air supply port parameters of the indoor unit, the outdoor ambient temperature, and the indoor ambient temperature.

S102: Obtaining a pressure deviation according to a high pressure of the outdoor unit and the theoretical discharge pressure.

In some embodiments, the high pressure of the outdoor unit can be obtained by a high pressure sensor provided at the air outlet of the compressor of the multi-split air conditioner, and recorded as a high pressure sensor value $PC_{sensor}$. Further, comparing the obtained theoretical discharge pressure value $PC_{cal}$ with the high pressure sensor value $PC_{sensor}$, the pressure deviation DP can be calculated. The calculation process includes: calculating a difference between the theoretical discharge pressure and the high pressure; calculating a ratio of the difference to the high pressure to obtain the pressure deviation DP, i.e. the calculation formula of the pressure deviation DP is:

$$DP = \frac{PC_{cal} - PC_{sensor}}{PC_{sensor}}.$$

S103: Performing starting control of the multi-split air conditioner system according to the pressure deviation.

In some embodiments, in a case where the outdoor ambient temperature is low and the normal starting of the multi-split air conditioner may cause damage, the severity degree of the starting condition of the multi-split air conditioner can be determined according to the pressure deviation, for example, when the pressure deviation is small, the starting condition can be considered to be generally severe, and at this moment, only the compressor of the outdoor unit can be preheated, and when the preheating satisfies a certain condition (such as a preheating time reaching a certain time), the normal starting logic of the multi-split air conditioner (i.e., a conventional logic suitable for direct starting) is executed; when the pressure deviation is large, it can be considered that the starting condition is relatively poor; at this moment, it is possible to perform electric auxiliary heat on the indoor unit while preheating the compressor of the outdoor unit, and the compressor starts at a specific frequency, the electronic expansion valves, etc of the indoor unit and the outdoor unit are adjusted, and when certain conditions are met, the normal starting logic of the multi-split air conditioner is executed. Thus, a starting logic is determined according to the severity degree of the starting condition of the multi-split air conditioner, and a situation where the multi-split air conditioner is started firstly and then is protected for the low-temperature heating can be changed to improve the reliability of the multi-split air conditioner and reduce the maintenance cost of the multi-split air conditioner.

In some embodiments of the present disclosure, M, N may each be an integer greater than 1.

In this embodiment, step S101 may include: obtaining an outdoor unit radiation heat exchange area according to M geometric parameters, obtaining an indoor unit radiation heat exchange area according to N air supply port parameters, obtaining an outdoor unit average ambient temperature according to M outdoor ambient temperatures, and obtaining an indoor unit average ambient temperature according to N indoor ambient temperatures; obtaining a theoretical air discharge saturation temperature and a theoretical air suction saturation temperature according to the outdoor unit radiation heat exchange area, the indoor unit radiation heat exchange area, the outdoor unit average ambient temperature and the indoor unit average ambient temperature; and obtaining the theoretical discharge pressure according to the theoretical air discharge saturation temperature and the theoretical air suction saturation temperature.

In another some embodiments of the present disclosure, both M and N have a value of 1.

In this embodiment, the calculation of the outdoor unit average ambient temperature and the indoor unit average ambient temperature may not be performed, and the theoretical air discharge saturation temperature and the theoretical air suction saturation temperature may be obtained directly according to the outdoor unit radiation heat exchange area, the indoor unit radiation heat exchange area, the outdoor ambient temperature and the indoor ambient temperature.

In some embodiments, the outdoor unit radiation heat exchange area can be obtained by the following formula:

$$A_{odu} = \sum_{i=1}^{M}[2 \times (OduL_i + OduW_i) \times OduHi + OduL_i \times OduW_i],$$

wherein $A_{odu}$ represents the outdoor unit radiation heat exchange area, $OduL_i$, $OduW_i$, and $OduHi$ represent respectively the length, width and height of the $i^{th}$ outdoor unit.

The indoor unit radiation heat exchange area can be obtained by the following formula:

$$A_{idu} = \sum_{i=1}^{N}(IduL_i \times IduW_i),$$

wherein $A_{idu}$ represents the indoor unit radiation heat exchange area, and $IduL_i$ and $IduW_i$ represent respectively the length and width of the air supply port of the $i^{th}$ indoor unit.

The outdoor unit average ambient temperature can be obtained by the following formula:

$$T4_{avg} = \frac{1}{M}\sum\nolimits_{i=1}^{M} T4_i,$$

wherein $T4_{avg}$ represents the outdoor unit average ambient temperature, and $T4_i$ represents the outdoor ambient temperature collected by the temperature sensor provided on the $i^{th}$ outdoor unit.

The indoor unit average ambient temperature can be obtained by:

$$T1_{avg} = \frac{1}{N}\sum\nolimits_{i=1}^{N} T1_i,$$

wherein $T1_{avg}$ represents the indoor unit average ambient temperature, and $T1_i$ represents the indoor ambient temperature collected by the temperature sensor provided on the $i^{th}$ indoor unit.

Further, according to the above-mentioned outdoor unit radiation heat exchange area $A_{odu}$, indoor unit radiation heat exchange area $A_{idu}$, outdoor unit average ambient temperature $T4_{avg}$ and indoor unit average ambient temperature $T1_{avg}$, the theoretical air discharge saturation temperature Tc and the theoretical air suction saturation temperature Te of the system in a relatively ideal state of the exhaust pipe, i.e., in the case that the exhaust pipe is not filled with the liquid refrigerant, can be obtained through calculation, and then the corresponding theoretical discharge pressure Pc can be obtained through physical property parameter query. If the corresponding relationship between the theoretical air discharge saturation temperature Tc and the theoretical air suction saturation temperature Te and the theoretical discharge pressure Pc can be stored in advance, after obtaining the theoretical air discharge saturation temperature Tc and the theoretical air suction saturation temperature Te, the corresponding relationship can be directly searched to obtain the corresponding theoretical discharge pressure Pc.

In this embodiment, the theoretical air discharge saturation temperature Tc, the theoretical air suction saturation temperature Te can be obtained by the following formula:

$$Q_{power} = \varepsilon_1 A_{odu}(Tc - T4_{avg}) = \varepsilon_2 A_{idu}(T1_{avg} - Te), \text{ and } Tc = Te,$$

wherein $Q_{power}$ represents a theoretical heat exchange intensity, $A_{odu}$ represents the outdoor unit radiation heat exchange area, $A_{idu}$ represents the indoor unit radiation heat exchange area, $\varepsilon_1$ represents a first coefficient, $\varepsilon_2$ represents a second coefficient, Tc represents the theoretical air discharge saturation temperature, Te represents the theoretical air suction saturation temperature, $T4_{avg}$ represents the outdoor unit average ambient temperature, and $T1_{avg}$ represents the indoor unit average ambient temperature.

In at least one embodiment of the present disclosure, step S 103 includes: controlling the multi-split air conditioner to execute a normal starting flow in response to a determination that the pressure deviation is greater than or equal to a first deviation degree; in response to a determination that the pressure deviation is smaller than the first deviation degree and greater than or equal to a second deviation degree, preheating the multi-split air conditioner for a second preset time duration, controlling the compressor to operate at a minimum allowable operating frequency for a third preset time duration, and controlling the multi-split air conditioner to execute the normal starting flow; and in response to a determination that the pressure deviation is smaller than the second deviation degree, preheating the multi-split air conditioner until a difference between an air outlet temperature of the compressor and a condensation temperature of the multi-split air conditioner is greater than a second difference threshold, and controlling the multi-split air conditioner to execute the normal starting flow; wherein a heating power for preheating is greater than or equal to the theoretical heat exchange intensity, the theoretical heat exchange intensity is obtained according to the outdoor unit radiation heat exchange area, the indoor unit radiation heat exchange area, the outdoor unit average ambient temperature and the indoor unit average ambient temperature.

In some embodiments, if the pressure deviation $DP \geq DP_{Set1}$ (i.e. the first deviation degree) is detected, it can be considered that the starting condition of the multi-split air conditioner is appropriate, at this time, the multi-split air conditioner can be directly controlled to execute the normal starting flow. If the pressure deviation $DP < DP_{set1}$ (i.e., the first deviation degree) and the pressure deviation $DP \geq DP_{set2}$ (i.e., the second deviation degree) are detected, it can be considered that the starting condition of the multi-split air conditioner is poor, at this time, a starting strategy I can be adopted to execute the starting flow, wherein the starting strategy I can be specifically: after the multi-split air conditioner is powered on, a pre-starting action is executed, i.e., a preheating measure (including one or more of a compressor crankshaft heating, a compressor electric heating belt, a low-pressure tank electric heating belt and a chassis heating) is started, and after maintaining the $T_{preheat1}$ time duration (i.e., the second preset time duration), the compressor is controlled to operate at the minimum allowable operating frequency for the $T_{minhz1}$ time duration (i.e., the third preset time duration), and then the multi-split air conditioner is controlled to execute the normal starting flow.

If the pressure deviation $DP < DP_{set2}$ (i.e. the second deviation degree) is detected, it can be considered that the starting condition of the multi-split air conditioner is bad, at this time, a starting strategy II can be adopted to execute the starting flow. The starting strategy II can be specifically: after the multi-split air conditioner is powered on, a pre-starting action is executed, i.e., a preheating measure (including one or more of compressor crankshaft heating, a compressor electric heating belt, a low-pressure tank electric heating belt and a chassis heating) is started, during this period, the air outlet temperature TP of the compressor and the condensation temperature TC of the multi-split air conditioner can be collected in real time, and when a difference value between the air outlet temperature of the compressor and the condensation temperature of the multi-split air conditioner, i.e., a value of TP-TC, is greater than the second difference value threshold (such as a minimum starting air discharge superheat degree $TDSH_{min}$), the preheating is determined to be finished, and then the multi-split air conditioner is controlled to execute the normal starting flow.

The heating power for preheating is greater than or equal to the theoretical heat exchange intensity $Q_{power}$ calculated above.

As an example, the first deviation degree $DP_{Set1}$ and the second deviation degree $DP_{set2}$ are not fixed values, but are obtained according to the heat exchanger area and the internal volume of the outdoor unit and the indoor unit of the current system, i.e. the values of the first preset deviation degree $DP_{Set1}$ and the second preset deviation degree $DP_{set2}$ in different system configurations are different.

As an example, during the executing of the normal starting flow after preheating, the method may further include: calculating a current fluctuation amplitude according to a starting current; and in response to a determination that the current fluctuation amplitude is greater than a preset amplitude threshold, stopping the normal starting flow, and returning to the step of preheating.

In some embodiments, after the preliminary starting action is completed, additional monitoring of the starting current is required during the implementation of the normal chiller starting strategy, and the starting current can be monitored by monitoring an instantaneous current fluctuation value when the compressor is driven. After the pre-starting time is eliminated, the current values $A_i$ and $A_{i+1}$ at any two adjacent acquisition moments are recorded in real time, and the current values $A_i$ and $A_{i+1}$ are used to calculate the current fluctuation amplitude $d_A$. The calculation method is similar

$$d_A = \frac{(A_{i+1} - A_i)}{A_i}$$

to that of the above-mentioned pressure deviation, and the calculation formula is as follows: . If it is identified that $d_A$ exceeds the current fluctuation limit maximum value $DA_{max}$ (i.e., the preset amplitude threshold value), it can be considered that there is an abnormal starting of the compressor, at this time, it is necessary to stop this normal starting flow at once and return to the step of preheating.

It should be understood that the entire starting control flow is exited when the normal starting flow is normally executed.

It should be noted that in general, after the multi-split air conditioner has been in a long time low-temperature standby, there is a problem that a large amount of liquid is taken in the suction air of the compressor, leading to an abnormal start of the compressor, causing abnormal vibration of the system pipeline and serious damage to the compressor. Therefore, it is possible to determine the starting condition of the multi-split air conditioner before executing the step S101.

As an embodiment of the present disclosure, before the theoretical discharge pressure is obtained, it is necessary to acquire low-temperature starting condition parameters of the multi-split air conditioner, determine whether the low-temperature starting condition parameters satisfy a preset low-temperature starting condition, and if the low-temperature starting condition parameters satisfy the preset low-temperature starting condition, performing the step of obtaining the theoretical discharge pressure according to the geometric parameters, the air supply port parameters, the outdoor ambient temperature and the indoor ambient temperature.

The low-temperature starting condition parameters include a standby time duration of the multi-split air conditioner, the air outlet temperature of the compressor and the outdoor ambient temperature, and the preset low-temperature starting condition is any one of the following: the standby time duration is greater than or equal to a first preset time duration, and the outdoor ambient temperature is smaller than or equal to a first preset temperature; or the difference between the air outlet temperature of the compressor and the outdoor ambient temperature is smaller than or equal to a first difference threshold, and the outdoor ambient temperature is smaller than or equal to the first preset temperature.

In some embodiments, when the standby time duration T0 is greater than or equal to a minimum standby time duration TimeOff_Max (i.e., the first preset time duration), i.e., $T0 \geq$ TimeOff_Max, and the outdoor ambient temperature T4 is smaller than or equal to a maximum temperature $T4_{max}$ (i.e., the first preset temperature) in the low-temperature starting mode, i.e., $T4 \leq T4_{max}$; or, when the difference between the air outlet temperature TP of the compressor and the outdoor ambient temperature T4 is smaller than or equal to the first difference threshold $dT4_{max}$, i.e., $|TP-T4| \leq dT4_{max}$, and the outdoor ambient temperature T4 is smaller than or equal to the first preset temperature $T4_{max}$, performing the step of obtaining the theoretical discharge pressure according to the geometric parameters, the air supply port parameters, the outdoor ambient temperature and the indoor ambient temperature.

The outdoor ambient temperature T4 may be an outdoor ambient temperature corresponding to any outdoor unit, or may also be an average value of a plurality of outdoor ambient temperatures. The first difference threshold may be a minimum value, such as a value between 0.01 and 0.5. In this case, the air outlet temperature of the compressor is substantially equal to the outdoor ambient temperature.

In summary, the control method of the multi-split air conditioner is based on the system parameters of the multi-split air conditioner before the starting of the low-temperature heating, the pressure deviation is firstly obtained through the system parameters, and a starting severity degree is evaluated according to the pressure deviation, and then the evaluation result is used as a selection basis of a system starting strategy, so as to change a situation where the multi-split air conditioner is firstly started and then is protected for the low-temperature heating, and by starting a diagnosis, a system and a compressor are further protected, thereby improving the reliability of the multi-split air conditioner and reducing maintenance costs of the multi-split air conditioner.

The present disclosure provides a computer-readable storage medium based on the control method for the multi-split air conditioner according to the above embodiment.

In an embodiment of the present disclosure, a computer program is stored on the computer-readable storage medium, and the computer program, when executed by a processor, implements the control method for the multi-split air conditioner of the above-described embodiment.

The computer-readable storage medium according to an embodiment of the present disclosure, when a computer program corresponding to the above-mentioned control method stored thereon is executed, can change a situation where the multi-split air conditioner is firstly started and then is protected for the low-temperature heating and further protect a system and a compressor by diagnosing a severity degree of a starting condition and performing a starting control according to a diagnosis result, thereby improving reliability of the multi-split air conditioner and reducing maintenance costs of the multi-split air conditioner.

The present disclosure also provides an electronic device based on the control method for the multi-split air conditioner according to the above embodiment.

In an embodiment of the present disclosure, the electronic device includes a memory, a processor, and a computer program stored on the memory, wherein the computer program, when executed by the processor, implements the control method for the multi-split air conditioner of the above-described embodiment.

The electronic device according to an embodiment of the present disclosure executes a computer program corresponding to the above-mentioned control method stored on a memory by a processor, and changes a situation where the multi-split air conditioner is firstly started and then is protected for the low-temperature heating and further protect a system and a compressor by diagnosing a severity degree of a starting condition and performing a starting control according to a diagnosis result, thereby improving reliability of the multi-split air conditioner and reducing maintenance costs of the multi-split air conditioner.

Further, the present disclosure provides a multi-split air conditioner.

FIG. 2 is a block diagram showing a multi-split air conditioner according to at least one embodiment of the present disclosure.

As shown in FIG. 2, the multi-split air conditioner 100 includes the electronic device 10 of the above-described embodiment.

In at least one embodiment of the present disclosure, the multi-split air conditioner includes an outdoor unit and an indoor unit, wherein the outdoor unit is disposed outdoors, the indoor unit is disposed indoors, the number of the indoor units may be one or more, the outdoor unit is connected to each of the indoor units through piping, and the outdoor unit includes a compressor.

Further, the outdoor unit further includes an oil separator, a four-way valve and an air-liquid separator, wherein an air discharge port of the air-liquid separator is connected to an air return port of the compressor via an air return pipe, an air outlet of the compressor is connected to an air inlet of the oil separator, an air discharge port of the oil separator is connected to a first end of the four-way valve, a second end of the four-way valve is connected to one end of an indoor heat exchanger of the indoor unit via an air pipe, the other end of the indoor heat exchanger is connected to one end of an outdoor heat exchanger via a liquid pipe, the other end of the outdoor heat exchanger is connected to a third end of the four-way valve, and a fourth end of the four-way valve is connected to an inlet of the air-liquid separator. Each of the indoor units includes the indoor heat exchanger, and the outdoor unit further includes the outdoor heat exchanger and a throttling device connected between the outdoor heat exchanger and the indoor heat exchanger. The throttling device may be an electronic expansion valve.

The multi-split air conditioner according to an embodiment of the present disclosure can further protect the system and the compressor by the above-described electronic device, thereby improving the reliability of the multi-split air conditioner and reducing the maintenance cost of the multi-split air conditioner.

It should be noted that the logic and/or steps represented in the flowcharts or otherwise described herein, such as an ordered listing of executable instructions that can be considered to implement logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. For the purposes of this specification, a "computer-readable medium" can be any means that can contain, store, communicate, propagate, or transport the program for use by or in connection with the instruction execution system, apparatus, or device. More specific examples (a non-exhaustive list) of computer-readable media include the following: an electrical connection (electronic device) having one or more wirings, a portable computer disc cartridge (magnetic device), a random access memory (RAM), a read-only memory (ROM), an erasable programmable read-only memory (EPROM or flash memory), an optical fiber device, and a portable optical disc read-only memory (CDROM). In addition, the computer-readable medium may even be paper or other suitable medium upon which the program is printed, as the program may be electronically obtained, such as by optically scanning the paper or other medium, followed by editing, interpreting, or otherwise processing in a suitable manner if necessary, and then stored in a computer memory.

It should be understood that portions of the present disclosure may be implemented in hardware, software, firmware, or a combination thereof. In the embodiments described above, the steps or methods may be implemented in software or firmware stored in memory and executed by a suitable instruction execution system. For example, if implemented in hardware, as in another embodiment, it may be implemented using any one or a combination of the following techniques known in the art: discrete logic circuits with logic gates for implementing logic functions on data signals, application specific integrated circuits with appropriate combinational logic gates, programmable gate arrays (PAir), field programmable gate arrays (FPAir), etc.

In describing the description, reference to the description of the terms "an embodiment", "some embodiments", "an example", "particular examples", or "some examples", etc., means that a particular feature, structure, material, or characteristic described in connection with the embodiment or example is included in at least an embodiment or example of the present disclosure. In this description, schematic representations of the above terms do not necessarily refer to the same embodiment or example. Further, the particular features, structures, materials, or characteristics described may be combined in any suitable manner in any one or more embodiments or examples.

In the description of the present disclosure, it is to be understood that the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, indicate orientations or positional relationships based on those shown in the drawings, merely for convenience of description and simplification of the description, and do not indicate or imply that the device or element referred to must have a particular orientation, be constructed in a particular orientation, and be operated, and thus, are not to be construed as limiting the present disclosure.

Further, the terms "first" and "second" are used for descriptive purposes only and are not to be construed as indicating or implying relative importance or implicitly indicating the number of technical features indicated. Thus, features defining "first" and "second" may explicitly or implicitly include at least one such feature. In the description of the present disclosure, "a plurality of" refers to at least two, e.g. two, three, etc. unless specifically and specifically limited otherwise.

In the present disclosure, unless explicitly stipulated and limited otherwise, the terms "mounted", "coupled", "connected", "fixed" and the like are to be understood in a broad sense, for example, they may be fixedly connected or detachably connected, or integrated; may be a mechanical connection or an electrical connection; it can be directly connected or indirectly connected through an intermediate medium, and can be the communication between two elements or the interaction relationship between two elements unless explicitly defined otherwise. The specific meaning of the above terms in the present disclosure can be understood by a person skilled in the art according to specific circumstances.

In the present disclosure unless expressly specified and limited otherwise, the first feature "on" or "under" the second feature may be that the first and second features are in direct contact, or that the first and second features are in indirect contact through an intermediary. Further, the first feature being "on", "above" and "over" the second feature may be directly above or obliquely above the second feature or merely indicate that the first feature is at a higher level than the second feature. The first feature being "under", "below" and "beneath" the second feature may be that the first feature is directly below or obliquely below the second feature, or simply that the first feature has a smaller level than the second feature.

While embodiments of the present disclosure have been shown and described, it will be understood that the above-described embodiments are illustrative and not restrictive, and that changes, modifications, substitutions and alterations may be made by a person skilled in the art without departing from the scope of the present disclosure.

**Claims**

1.  A control method for a multi-split air conditioner, wherein the multi-split air conditioner comprises an outdoor unit and an indoor unit, the method comprising:

    obtaining a theoretical discharge pressure according to a geometric parameter of the outdoor unit, an air supply port parameter of the indoor unit, an outdoor ambient temperature, and an indoor ambient temperature;
obtaining a pressure deviation according to a high pressure of the outdoor unit and the theoretical discharge pressure; and
performing starting control of the multi-split air conditioner system according to the pressure deviation.

2.  The method according to claim 1, further comprising:
performing the step of obtaining the theoretical discharge pressure in response to a determination that a standby duration of the multi-split air conditioner is greater than or equal to a first preset time duration, and the outdoor ambient temperature is smaller than or equal to a first preset temperature.

3.  The method according to claim 1, wherein a number of the outdoor unit is M, a number of the indoor unit is N, and said obtaining the theoretical discharge pressure comprises:

obtaining an outdoor unit radiation heat exchange area according to M geometric parameters, obtaining an indoor unit radiation heat exchange area according to N air supply port parameters, obtaining an outdoor unit average ambient temperature according to M outdoor ambient temperatures, and obtaining an indoor unit average ambient temperature according to N indoor ambient temperatures;
obtaining a theoretical air discharge saturation temperature and a theoretical air suction saturation temperature according to the outdoor unit radiation heat exchange area, the indoor unit radiation heat exchange area, the outdoor unit average ambient temperature and the indoor unit average ambient temperature; and
obtaining the theoretical discharge pressure according to the theoretical air discharge saturation temperature and the theoretical air suction saturation temperature.

4.  The method according to claim 1, wherein said performing starting control of the multi-split air conditioner system according to the pressure deviation comprises:

controlling the multi-split air conditioner to execute a normal starting flow in response to a determination that the pressure deviation is greater than or equal to a first deviation degree;
in response to a determination that the pressure deviation is smaller than the first deviation degree and greater than or equal to a second deviation degree, preheating the multi-split air conditioner for a second preset time duration, controlling a compressor to operate at a minimum allowable operating frequency for a third preset time duration, and controlling the multi-split air conditioner to execute the normal starting flow; and
in response to a determination that the pressure deviation is smaller than the second deviation degree, preheating the multi-split air conditioner until a difference between an air outlet temperature of the compressor and a condensation temperature of the multi-split air conditioner is greater than a second difference threshold, and controlling the multi-split air conditioner to execute the normal starting flow;
wherein a heating power for preheating is greater than or equal to a theoretical heat exchange intensity, the theoretical heat exchange intensity being obtained according to the outdoor unit radiation heat exchange area, the indoor unit radiation heat exchange area, the outdoor unit average ambient temperature and the indoor unit average ambient temperature.

5.  The method according to claim 4, further comprising: during the executing of the normal starting flow after preheating,

calculating a current fluctuation amplitude according to a starting current; and
in response to a determination that the current fluctuation amplitude is greater than a preset amplitude threshold, stopping the normal starting flow, and returning to the step of preheating.

6.  The method according to claim 4, wherein the theoretical air discharge saturation temperature $Tc$, the theoretical air suction saturation temperature $Te$, and the theoretical heat exchange intensity $Q_{power}$ are obtained by:

$$Q_{power} = \varepsilon_1 A_{odu}(Tc - T4_{avg}) = \varepsilon_2 A_{idu}(T1_{avg} - Te), \text{ and } Tc = Te,$$

wherein $A_{odu}$ represents the outdoor unit radiation heat exchange area, $A_{idu}$ represents the indoor unit radiation heat exchange area, $\varepsilon_1$ represents a first coefficient, $\varepsilon_2$ represents a second coefficient, $T4_{avg}$ represents the outdoor unit average ambient temperature, and $T1_{avg}$ represents the indoor unit average ambient temperature.

7.  The method according to claim 4, wherein said obtaining the pressure deviation according to the high pressure and the theoretical discharge pressure comprises:

calculating a difference between the theoretical discharge pressure and the high pressure; and
calculating a ratio of the difference to the high pressure to obtain the pressure deviation.

8. A computer-readable storage medium, having a computer program stored thereon, wherein the computer program, when executed by a processor, implements a method according to any one of claims 1 to 7.

9. An electronic device, comprising a memory, a processor and a computer program stored on the memory, wherein the computer program, when executed by the processor, implements the method according to any one of claims 1 to 7.

10. A multi-split air conditioner, comprising the electronic device according to claim 9.

| Obtaining a theoretical air discharge pressure according to geometric parameters of the outdoor unit, air supply port parameters of the indoor unit, an outdoor ambient temperature, and an indoor ambient temperature | S101 |

| Obtaining a pressure deviation degree according to a high pressure of the outdoor unit and the theoretical air discharge pressure | S102 |

| Performing control on starting of the multi-split air conditioner according to the pressure deviation degree | S103 |

FIG. 1

Multi-split air conditioner 100

Electronic device 10

FIG. 2

| **INTERNATIONAL SEARCH REPORT** | International application No. |
|---|---|
| | **PCT/CN2023/079615** |

| **A.** | **CLASSIFICATION OF SUBJECT MATTER** |
|---|---|
| | F24F11/48(2018.01)i |

According to International Patent Classification (IPC) or to both national classification and IPC

| **B.** | **FIELDS SEARCHED** |
|---|---|

Minimum documentation searched (classification system followed by classification symbols)

    F24F

Documentation searched other than minimum documentation to the extent that such documents are included in the fields searched

Electronic data base consulted during the international search (name of data base and, where practicable, search terms used)

    CNTXT, ENTXT, ENTXTC, WPABS, WPABSC: 美的, 蒋运鹏, 吴晓鸿, 颜华周, 李鹏飞, 黄志林, 多联机, 启动, 起动, 开机, 开启, 室外机, 室内机, 压缩机, 几何参数, 环境温度, 室外温度, 室内温度, 高压压力, 排气压力, 偏离, 偏差, 预热, 预加热, 控制, air conditioner, multi-machine, compressor, control+, outdoor, indoor, temperature, start, preheat+, discharge pressure, high pressure, deviation, ambient temperature, environment temperature, geometrical parameter, starting up

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| A | CN 105953359 A (GUANGDONG MEDIA REFRIGERATION EQUIPMENT CO., LTD. et al.) 21 September 2016 (2016-09-21)<br>    description, paragraphs 4-42, and figures 1-4 | | 1-10 |
| A | CN 109458711 A (ZHUHAI GREE ELECTRIC APPLIANCES INC.) 12 March 2019 (2019-03-12)<br>    entire document | | 1-10 |
| A | CN 109579240 A (QINGDAO HISENSE HITACHI AIR CONDITIONING SYSTEM CO., LTD.) 05 April 2019 (2019-04-05)<br>    entire document | | 1-10 |
| A | CN 110529981 A (NINGBO AUX ELECTRIC CO., LTD.) 03 December 2019 (2019-12-03)<br>    entire document | | 1-10 |
| A | CN 112665108 A (GUANGDONG MEDIA REFRIGERATION EQUIPMENT CO., LTD. et al.) 16 April 2021 (2021-04-16)<br>    entire document | | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 March 2023** | **06 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2023/079615** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 112728725 A (GREE GREEN REFRIGERATION TECHNOLOGY CENTER CO., LTD. OF ZHUHAI) 30 April 2021 (2021-04-30)<br>entire document | 1-10 |
| A | CN 113623793 A (NINGBO AUX ELECTRIC CO., LTD. et al.) 09 November 2021 (2021-11-09)<br>entire document | 1-10 |
| A | CN 114110973 A (ZHUHAI GREE ELECTRIC APPLIANCES INC.) 01 March 2022 (2022-03-01)<br>entire document | 1-10 |
| A | CN 203516011 U (TCL AIR CONDITIONER (ZHONGSHAN) CO., LTD.) 02 April 2014 (2014-04-02)<br>entire document | 1-10 |
| A | WO 2019202629 A1 (MITSUBISHI ELECTRIC CORP.) 24 October 2019 (2019-10-24)<br>entire document | 1-10 |

**INTERNATIONAL SEARCH REPORT**
Information on patent family members

International application No.

**PCT/CN2023/079615**

| Patent document cited in search report | | | Publication date (day/month/year) | Patent family member(s) | | | Publication date (day/month/year) |
|---|---|---|---|---|---|---|---|
| CN | 105953359 | A | 21 September 2016 | None | | | |
| CN | 109458711 | A | 12 March 2019 | None | | | |
| CN | 109579240 | A | 05 April 2019 | None | | | |
| CN | 110529981 | A | 03 December 2019 | None | | | |
| CN | 112665108 | A | 16 April 2021 | None | | | |
| CN | 112728725 | A | 30 April 2021 | None | | | |
| CN | 113623793 | A | 09 November 2021 | None | | | |
| CN | 114110973 | A | 01 March 2022 | None | | | |
| CN | 203516011 | U | 02 April 2014 | None | | | |
| WO | 2019202629 | A1 | 24 October 2019 | JPWO | 2019202629 | A1 | 12 February 2021 |
| | | | | JP | 6929449 | B2 | 01 September 2021 |

Form PCT/ISA/210 (patent family annex) (July 2022)

**EP 4 365 504 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210302226